Europäisches Patentamt

European Patent Office

Office européen des brevets

(11) Veröffentlichungsnummer: **0 150 813 B1**

(12) **EUROPÄISCHE PATENTSCHRIFT**

(45) Veröffentlichungstag der Patentschrift: **25.03.92**

(51) Int. Cl.⁵: **G06F 3/16**

(21) Anmeldenummer: **85100700.5**

(22) Anmeldetag: **24.01.85**

(54) Verfahren zur Manipulation von Bildschirmdarstellungen durch Sprachbefehle.

(30) Priorität: **26.01.84 US 573945**

(43) Veröffentlichungstag der Anmeldung:
**07.08.85 Patentblatt 85/32**

(45) Bekanntmachung des Hinweises auf die
Patenterteilung:
**25.03.92 Patentblatt 92/13**

(84) Benannte Vertragsstaaten:
**CH DE FR GB IT LI NL SE**

(56) Entgegenhaltungen:
**GB-A- 2 070 822**

**ELECTRONIC DESIGN, Band 28, Nr. 24, 22.
November 1980, Seiten 35-36, Minnesota,
Denville, New Jersey, US; J. McLeod:
"Module lets CAD system respond to designer's voice"**

**PATENT ABSTRACTS OF JAPAN, Band 5, Nr.
175(P-88)[847], 11. November 1981; JP-A-56
105 536 (TOKYO SHIBAURA DENKI K.K.)
22-08-1981**

**IBM TECHNICAL DISCLOSURE BULLETIN,
Band 26, Nr. 3A, August 1983, Seite 997, New
York, US; W.L. TERRELL: "Voice comand user**

**interface processor"**

(73) Patentinhaber: **FROESSL, Horst
Gutenbergstrasse 2-4
W-6944 Hemsbach(DE)**

Patentinhaber: **Durrer, Robert, Dr.
Schübelstr. 1
CH-8700 Küsnacht(CH)**

(72) Erfinder: **Froessl, Horst
Gutenbergstrasse 2-4
W-6944 Hemsbach(DE)**
Erfinder: **Froessl-Morgener, Monika
Gutenbergstrasse 2-4
W-6944 Hemsbach(DE)**
Erfinder: **Wolfgang, Coy. Prof. Dr.
Feldstrasse 14
W-28-Bremen 1(DE)**

(74) Vertreter: **EGLI-EUROPEAN PATENT ATTOR-
NEYS
Horneggstrasse 4
CH-8008 Zürich(CH)**

EP 0 150 813 B1

# Beschreibung

Die Erfindung betrifft ein Verfahren zur Manipulation von Bildschirmdarstellungen durch Sprachbefehle gemäss dem Oberbegriff des Anspruchs 1. Ein solches Verfahren ist aus ELECTRONIC DESIGN, Band 28, Nr. 24, 22. November 1980, Seiten 35-36, Minnesota, Denville, New Jersey, US; J. McLeod: "Module lets CAD system respond to designer's voice" bekannt.

Normalerweise werden bei der Arbeit mit einem Computer oder einem Computerterminal die Befehle oder Daten über eine Tastatur von einer Bedienungsperson eingegeben. Daten können zwar auch gleichzeitig oder zu einem anderen Zeitpunkt über automatische Lesegeräte, Sensoren, andere Computer oder andere Geräte oder Apparate geliefert werden, jedoch werden in den weitaus meisten Fällen die Daten von einer Bedienungsperson über eine Tastatur eingegeben, wobei in einigen Spezialfällen eine "Maus", ein Lichtgriffel oder Bildschirmberührung zu Hilfe genommen wird. Dies ist deshalb nicht überraschend, weil die Tastatur das wirksamste Mittel zur Dateneingabe für sehr viele Situationen darstellt. Sie ermöglicht eine schnelle und relativ einfache Uebersetzung der menschlichen Sprache und Gedanken entweder in eine Maschinensprache oder in einen Zwischencode, von welchem die Maschinensprache sogleich mittels eines Assemblers abgeleitet werden kann.

Wenn man von den seltenen und speziellen Fällen absieht, in welchen ein Lichtgriffel, eine Maus o. dgl. verwendet werden können, hat die Tastatur als ausschliessliches Eingabegerät einige Nachteile. Zu diesen Nachteilen gehört die Tatsache, dass die Tastatur die Hände der Bedienungsperson bindet und die gleichzeitige Verwendung der Hände für andere Aufgaben verhindert. Die Verwendung der Tastatur verlangt ferner Uebung und Fähigkeiten, die von der auszuführenden Aufgabe abhängen.

Alleinige Verwendung der Tastatur als Eingabegerät ist insbesondere dann nachteilig, wenn die Bedienungsperson andere Dokumente durchschauen oder auf diese hinweisen muss, während sie mit der Tastatur beschäftigt ist. Zusätzlich wäre eine Lösung äusserst vorteilhaft, bei der eine Person an einer Stelle mit Entscheidungsfunktionen mit dem Computer arbeiten könnte, ohne dabei die Tastatur bedienen zu müssen. Zudem ist die Tastatur bei einigen Arten von Invalidität eher ein Hindernis als eine Hilfe.

Aufgabe der vorliegenden Erfindung ist die Schaffung von vorteilhaften Verfahren zur Verwendung der menschlichen Stimme als Eingabe zu Anlagen zur Datenverarbeitunganlage sowohl für Kontrolle als auch zum Zwecke der begrenzten Dateneingabe, und weiter die Verwendung der Stimme als Eingabe von Daten und Instruktionen unter denjenigen Umständen, in welchen es schneller und wirksamer ist als die Eingabe mittels Tastatur oder anderer Verfahren.

Zusammengefasst besteht die Erfindung in einem Verfahren zur Verwendung einer Stimmeingabe zu einem Gerät zur Datenverarbeitung derjenigen Art, welche mit einem visuellen Anzeigeschirm ausgestattet ist, wobei eine Vorrichtung zur Anzeige von selektierten Ebenbildern auf dem Schirm vorgesehen ist, wobei man einen Satz von visuellen Aufteilungen auf dem Schirm vorsieht, die den Schirm in Sektionen aufteilen, die eindeutig mit einem oder mehreren alphanumerischen Symbolen beschrieben werden können und eine Speicherstelle für Datenbits vorgesehen ist, von welchen eine Darstellung auf dem Schirm erzeugt werden kann. Die Speicherstelle ist funktionell in eine Vielzahl von Speicherstellen aufgeteilt, deren Anzahl mindestens der Anzahl von Sektionen des Schirmes entspricht, so dass die Adresse der Speicherstellen funktionell auf die Ebenbilddarstellungen auf dem Schirm bezogen werden können. Ein auf Stimmen ansprechender Wandler dient zur Umwandlung der empfangenen Aeusserung in elektrische Signale, welche Sprachmuster darstellen und in einem Sprachmusterwörterbuch mit einer Vielzahl von Aeusserungen gespeichert sind, wobei die Aeusserungen die alpfanumerischen Symbole einschliessen, weiche die Sektoren und vorgewählte Instruktionen identifizieren. Die vom Wandler empfangenen Sprachmuster werden mit dem gespeicherten Wörterbuch von Mustern verglichen, wobei die als Ausgabe wiedererkannten Aeusserungen entweder als eine Instruktion oder Sektoridentifikation mit nachfolgender Instruktionen erzeugt werden, zusammenpassende Muster als Wiedererkennung einer Aeusserung definiert werden. Einer Wiedererkennung folgt die Ausführung eines empfangenen Befehls, der sich auf einen bestimmten Sektor bezieht, wenn ein spezifischer Sektor identifiziert wird.

Nachfolgend werden Ausführungsbeispiele des Gegenstandes der Erfindung anhand der Zeichnung näher erläutert. Es zeigen:

Fig. 1   ein Blockschaltbild einer Einrichtung gemäss einer ersten Ausführungsform der vorliegenden Erfindung,

Fig. 2   ein erstes vereinfachtes Diagramm zur Erläuterung der verwendeten Sektortechnik,

Fig. 3   ein zweites Diagramm, wie Fig. 2,

Fig. 4   ein drittes Diagramm, wie Fig. 2,

Fig. 5   ein Flussdiagramm einer bestehenden Technik zur Sprachwiedererkennung in Blockform, und

Fig. 6   ein schematisches Blockdiagramm einer Einrichtung gemäss einer zweiten Ausführungsform der vorliegenden Erfindung.

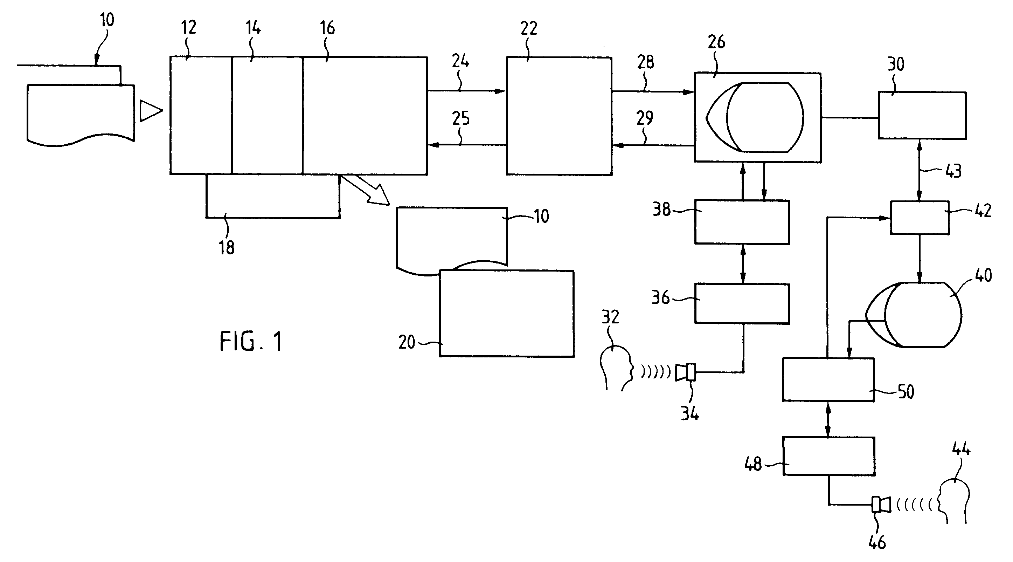

In Fig. 1 ist eine Einrichtung dargestellt bei der Dokumente 10 in einer Folge einem Drucker 12 zugeführt und mit einem identifizierenden Code versehen werden. Danach werden sie einem Lesegerät 14 zugeführt, das jedes zugeführte Dokument optisch abtastet. Ein Digitalumsetzer 16 bildet einen Bestandteil des Lesegerätes 14 und erzeugt Digitalsignale, welche digitale Annäherungsmuster der Buchstaben, Zahlen und graphischen Darstellungen erzeugen, die auf einem Quellen-Dokument 10 angezeigt werden. Die Druck-, Lese- und Digitalisierungsfunktion werden von einer Steuerungsvorrichtung 18 überwacht, die normalerweise als Teil des Lesegerätes 14 oder Digitalumsetzers 16 geliefert wird und leicht zur zusätzlichen Steuerung der Druckerfunktion angepasst werden kann. Nach dem Drucken, Lesen und Digitalumwandeln werden die Dokumente 10 einer Quellenbeleg-Speicherstelle 20 für eine nachfolgende Ueberprüfung zur Verfügung stehen, von wo sie aber normalerweise nicht entfernt werden.

Der Digitalumsetzer 16 ist in beiden Richtungen mit einem Pufferspeicher 22 für digitale Muster über Kanäle 24 und 25 zwecks Kommunikation verbunden, welche zur Datenübertragung und Rückkopplung bezüglich zur Verfügung stehenden Speicherplatzes und anderen Bedienungsfunktionen dienen. Die im Speicher 22 gespeicherten Muster werden einer Anzeigevorrichtung 26 zugeführt, normalerweise ein Bildschirm herkömmlicher Art, die mit dem Speicher 22 über Kanäle 28 und 29 im Informationsaustausch steht.

Ein Hauptzweck dieses Teils der Einrichtung besteht in der Darstellung der Muster vom Quellen-Dokument 10 in Digitalform an der Anzeige 26, damit verschiedene Formen der weiteren Verwendung der Dokumente dort festgelegt werden können. Eine besondere Funktion ist die Auswahl bestimmter Informationen aus Quelldokumenten oder, sofern erwünscht, des gesamten Inhalts desselben, damit die Muster in einem Standard-Digitalcode, wie z.B. ASCII, codiert und in einem Massen-Digitalspeicher 30 gespeichert werden können.

Gemäss der vorliegenden Erfindung wird die Bedienungsperson 32 mit einem auf mündliche Eingaben ansprechenden Mikrophon 34 einem Wandler, einer Spracherkennungsvorrichtung 36 und einen Assembler 38, der zur Ueberwachung von bestimmten Funktionen des Bildschirms 26 angeschlossen ist, ausgerüstet. Die in der Folge detailliert beschriebene Spracherkennungsvorrichtung 36 kann elektrische Sprachsignale, erzeugt von einem Mikrophon 34 ausgehend von akustischen Aeusserungen der Bedienungsperson aufnehmen und die Spracherkennungseinheit ist ferner in der Lage, bestimmte Aeusserungen innerhalb eines definierten Lexikons als alphanumerische Symbole und vorbestimmte Befehle zu identifizieren. Nicht erkannte Aeusserungen können nur eine visuelle Anzeige oder eine hörbare Anzeige erzeugen, welche "nicht erkannt" bedeutet. Die erkannten Aeusserungen werden dem Assembler 38 zugeführt, von dem sie ausgeführt werden, indem Anzeige 26 gemäss dem gegebenen Befehl gesteuert wird.

Ein Vorteil dieser Einrichtung wird dann erkennbar, wenn man berücksichtigt, dass diejenige Person, welche die Substanz im Dokument 10 betrachtet, Entscheidungen bezüglich ihrer weiteren Verwendung treffen muss, wobei meistens Bezugnahme auf verschiedene andere Dokumente zur Identifizerung von Personen, Stellen und anderer Informationen erforderlich ist, die einen schnellen Entscheidungsprozess ermöglicht. Mit einer begrenzten Anzahl von Sprachbefehlen ist es für eine Bedienungsperson möglich, ihre Hände frei zu halten, um diese oder jene Aufgaben auszuführen, während sie Instruktionen an den Bildschirm 26 mittels der beschriebenen Einrichtung erteilt. Beispielsweise ist es viel schneller, eine Anzeige zu zentrieren, wenn sie nicht zentriert ist, indem "rechts", "oben" o. dgl. ausgesprochen wird. Eine viel schnellere Bewegung des Positionsanzeigers ist durch Befehle wie "spring nach" gefolgt von einer Zeilennummer oder einer anderen Identifikation einer Textstelle möglich.

Diese Vorgehensweise kann auch durch Verwendung einer Spracheingabe zusammen mit anderen Eingabe- oder Befehlsgeräten benutzt werden.

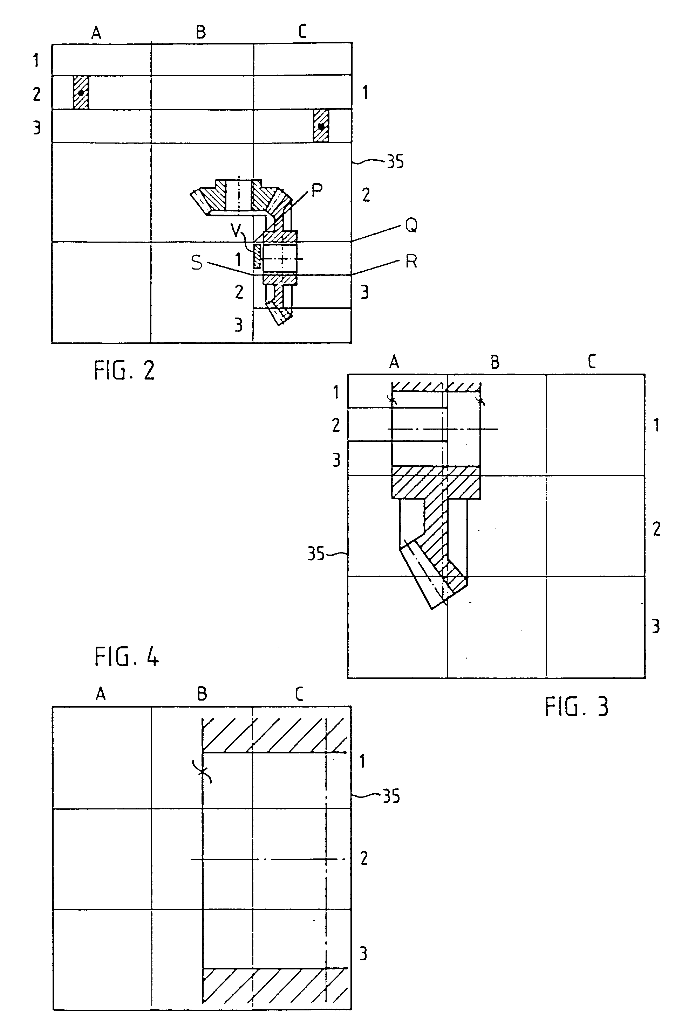

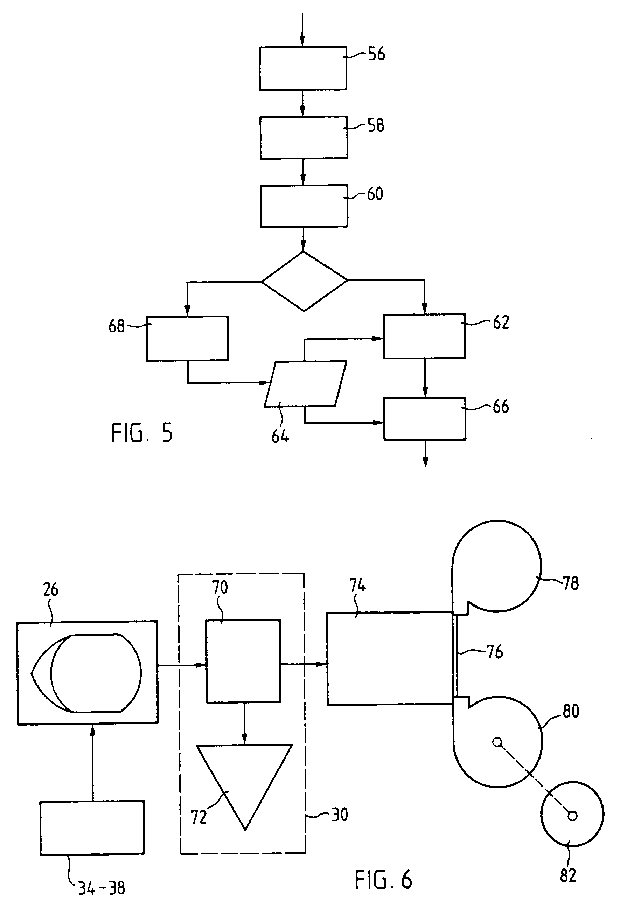

Gemäss der Erfindung ist ein Gittersystem nach Fig. 2, 3 und 4 zu verwenden. In Fig. 2 ist ein Quadrat 35 am Bildschirm in vereinfachter Form dargestellt. Vertikale und horizontale Linien sind am Schirm entweder permanent ausserhalb oder mittels Videozeilengenerators innerhalb vorhanden, wobei die vertikalen und horizontalen Linien durch alphanumerische Symbole gemäss Fig. 2 identifiziert sind. Es wird angenommen, dass die Bedienungsperson eine Vergrösserung desjenigen Teils eines Bildes wünscht, der sich als Fig. 2 in Kästchen C3 befindet. Dazu braucht die Bedienungsperson nur zu sagen "C,3, ganzer Schirm", weil diese Aeusserung als Instruktion zur Vergrösserung des Bildschirmbereichs C3 auf die ganze Schirmgrösse, wie dies in Fig. 3 gezeigt ist, ausgelegt wird. Dieses Verfahren kann von der Bedienungsperson wiederholt werden, indem sie "A,1, ganzer Schirm" ausspricht, wonach das im Quadrat A1 gezeigte Material derart vergrössert wird, dass es die ganze Schirmfläche belegt, wie es in Fig. 4 gezeigt ist. Dieser Teil kann dann gespeichert werden oder auch ein Teil davon kann von der Bedienungsperson gespeichert werden, indem sie "B,2, speichern" ausspricht.

Es wird darauf hingewiesen, dass diese Instruktionen lediglich Beispiele darstellen und dass andere Formen von Codewörtern verwendet werden können. Es ist notwendig, dass ein Vergleichswörterverzeichnis erstellt wird.

Die Bewegung des Positionsanzeigers ist viel schneller und andere Manipulationen sind ebenfalls viel schneller, wenn diese Technik statt Tastaturbedienung benutzt wird.

Der Betrieb der Einrichtung wird nun näher erklärt, indem die beabsichtigte Verwendung eingehender erläutert wird. Ein Hauptziel besteht im erlaubten Zugriff für ausgewählte Personen auf Darstellungen von Dokumenten, die im Speicher 30 gespeichert sind. Nehmen wir beispielsweise an, dass eine Person in einer Entscheidungsfunktion einen Bildschirm 40 mit einem Pufferspeicher 42 benutzt, der in beiden Richtungen über ein Kabel 43 mit einem Speicher 30 verbunden ist. Die Person 44 ist mit einem Mikrophon 46, einer Spracherkennungseinheit 48 und einem Positions- und Befehlsassembler 50, welcher mit dem Pufferspeicher 42 verbunden ist, ausgestattet. Durch einen entsprechenden Befehl werden diejenigen Dokumente, welche gemäss einem beliebigen Code für eine bestimmte Person 44 vorgesehen sind, vom Speicher 30 zum Pufferspeicher 42 abgerufen und stehen für simultane oder sequentielle Anzeige zur Verfügung. Mittels einer einfachen Gruppe von Befehlen kann die Person 44 die weitere Verwendung von verschiedenen Dokumenten dadurch festlegen, dass sie sie entweder unbearbeitet in den Speicher zurückschickt, einer anderen Person im Betrieb zuführt oder jemandem ausserhalb des Betriebs zuleitet oder sie sonstwie behandelt. Bezugnahme auf Adressen durch die in den Fig. 2, 3 und 4 identifizierten Bereiche ist möglich, wobei die tatsächliche Anzahl von Unterteilungen auf dem Bildschirm normalerweise etwas höher ist als in den Fig. 2 bis 4 gezeigt ist.

Die in Fig. 1 gezeigte Einrichtung ist auch zur Berichtigung von Text oder in begrenztem Umfang zur Hinzufügung von Daten geeignet. Während der Betrachtung des digitalisierten Textes vor dem Codieren und Speichern können Buchstaben eingefügt werden, welche nicht vom Leser 14 erkannt wurden, oder Buchstaben oder Symbole richtiggestellt werden, die nicht richtig gelesen wurden. Dies ist eine Funktion, die viel schneller mit der Stimme als mit der herkömmlichen Tastatur durchführbar ist, indem Befehle, wie "Positionsanzeiger springen bis" mit nachfolgender Positionsangabe erteilt werden. Wenn beispielsweise das Schirmgitter durch horizontale Linien in fünf Sektionen und durch vertikale Linien in vier Sektionen aufgeteilt ist, kann ein Befehl "A1 Positionsanzeiger springen bis B4" bewirken, dass er in eine Zone bewegt wird, wo Korrekturen durchgeführt oder Daten erfasst werden müssen, wobei der ganze Vorgang viel schneller abläuft als bei herkömmlicher Tastatureingabe. Eine weitere Präzisierung der Position ist durch Befehle "links, rechts" oder mittels Tastendruck möglich.

Das Hinzufügen von Text durch mündliche Eingabe ist möglich, falls das Befehlsverzeichnis neben entsprechenden Befehlen entsprechende zusätzliche Einträge - naheliegenderweise Buchstaben und Zahlen, die ohnedies für die Positionscodierung gebraucht werden - aufweist. Ein typischer Ablauf einer Spracherkennung ist in Fig. 5 dargestellt, wobei ein Sprach-Eingangssignal vom Mikrophon 34 oder 46 in elektrische Signale umgesetzt wird. Dieses Signal wird einer Analyse und einem mustervergleichenden Verfahren unterworfen, bei dem eine Signalanalyse und Merkmalsdetektion in Block 56 stattfindet. Ein Hauptproblem bei den Einrichtungen zur Spracherkennung besteht im allgemeinen in der Erkennung der Wortenden. Daher erfolgt in der nächsten Stufe 58 eine Bestimmung des Endes der jeweiligen Aeusserung. In einer nächsten Stufe 60 werden Frequenz und Dauer der Aeusserung normiert und anschliessend das Signal einer Zeitverzerrung unterworfen. In einem Wörterverzeichnis 64 sind Aeusserungsmuster eingetragen, welche die Einrichtung wiedererkennen soll, und diese Muster werden mit den verarbeiteten Sprachsignalen verglichen, wobei der Grad der Aehnlichkeit in einem Wertungsverfahren in 66 festgestellt wird. Die daraus resultierende Entscheidung gibt an, ob ein Befehl oder ein alphanumerisches Symbol wiedererkannt wird oder nicht, worauf gegebenenfalls entsprechende Anzeige erfolgt.

Derartige Einrichtungen werden normalerweise einem Training unterworfen, in dem die eine Aeusserung in der Stimme der Bedienungsperson kennzeichnenden Merkmale erkannt und im Wörterverzeichnis gespeichert werden, wobei normalerweise Durchschnittswerte einer grösseren Anzahl von wiederholten Aussagen des gleichen Ausdruckes gebildet werden, so dass die Einrichtung nachher im Stande ist, gesprochene Aeusserungen der gleichen Person wiederzuerkennen. Eine sehr hohe Genauigkeit ist mit einem sehr begrenzten, von der gleichen Person gesprochenen Wörterverzeichnis erreichbar, wobei die Wiedererkennungsquote bei anderen Personen geringer ist.

Mündliche Eingaben können ferner zur Erzeugung von graphischen Illustrationen am Bildschirm verwendet werden. Die Bedienungsperson braucht dabei nur den Inhalt eines kleinen Befehlsverzeichnisses zu kennen. Es sind normalerweise keine Aenderungen im Basisprogramm der Maschine erforderlich. Das Programm für graphische Zwecke erkennt normalerweise eine Instruktion, die eine kleine Anzahl von Wörtern umfasst.

Eine weitere erleichterte Definition mittels Spracheingabe wird durch ein programmiertes, von links nach rechts wanderndes Feld erreicht, wobei der Startpunkt für das wandernde Feld nach Belieben mittels Sprache auf irgendein beliebiges Quadrat - auch versetzt - gesetzt werden kann und von dort automatisch nach rechts wandert.

Beispiele:

In Fig. 2 werden die Kästchen weiter unterteilt. Durch Sprachbefehl wird z.B. C1/1 definiert. Ein längliches Viereck V erscheint bei C1/1 auf dem Bildschirm und bewegt sich automatisch von links nach rechts. Bei z. B. dem Befehl "Stop" erfolgt automatisch eine Bildvergrösserung, welche falls nötig durch einen oder mehrere Befehle weiter verstärkt werden kann. Z.B. kann durch einen bestimmten Befehl, mit einer Zahl kombiniert, genau die Mitte des erfassten Bildes mehrfach vergrössert werden.

Bei der Erfassung des Bildes in Fig. 2 (oder auch bei Schriften) könnte bei "Stop" bei den Punkten P,Q,R,S das Bild erfasst werden (bei Schriften zwei Punkte zur Definition Anfang/Ende).

Wird ein Cursor in einem Viereck, d.h. an vier Punkten gesetzt, so werden alle digitalen Muster in dem Viereck erfasst. Werden nur zwei Stellen bezeichnet, so beinhaltet das erfasste Feld die Fläche rechts vom definierten Punkt, rechtwinklig nach unten bis zur Höhe des zweiten definierten Punktes. Befindet sich auf der Höhe des ersten definierten Punktes kein zweiter, so werden alle folgenden Zeichen rechts vom ersten definerten Punkt bis zum Bildschirmrand erfasst und enden in der Zeile und bei der Stelle, wo der Endpunkt für dieses zu erfassende Segment gesetzt wurde.

Bei der Erfassung von Schriften kann das Programm so angelegt werden, dass zu Beginn zwei Wörter eingegeben werden (z.B. A1/2, C1/3, siehe Fig. 2 ), sodass nach Definition der ersten Stelle z.B. des Segmentes bei A1/2 das längliche Viereck V sofort zu dem Anfang von C1/3 springt, zwecks Definition der letzten Stelle.

Eine erforderliche Manipulation kann es auch sein, den Cursor in die Mitte des umrandeten Feldes links der Mitte eines Buchstabens zu setzen, um so eine zu erfassende Zeile genau zu definieren.

Bei Manipulationen welcher Art auch immer könnte selbst ein Punkt auf dem Bildschirm angesteuert und mittels mehrfachem Zoom definiert werden.

Mittels eines farbigen graphischen Bildschirmes ist es möglich, die quadratische Aufteilung auch in Farben vorzunehmen und mit Sprache anzusteuern, z.B. eine Unterteilung in Grün, Gelb, Blau, Rot horizontal und 1, 2, 3, 4 vertikal. Befehlsbeispiel: Blau 3.

Unabhängig von den dargestellten Zeichnungen können in gleicher Weise auch Texte erfasst werden.

Dabei können die jeweils zu definierenden Stellen mittels weniger Sprachbefehle festgelegt werden. Der Bildschirm kann auch anders als oben beschrieben unterteilt sein.

Das bewegliche Viereck kann an jeder Stelle auf dem Bildschirm gestartet werden, z.B. bei B2d.

Bei dem Befehl "B2, Start" beginnt sich die markierte Zone V in der Mitte der bezeichneten Zone B2 von links nach rechts zu bewegen. Bei dem Befehl "Zoom" vergrössert sich automatisch die jeweilige Stelle.

Durch einen kombinierten Befehl, z.B. B2,d und C2,f, d.h. durch den dem Befehl B2,d sofort folgenden Befehl C2,f wird die zuletzt genannte Stelle gespeichert und die Stelle vergrössert, bei welcher der letzte Befehl ausgesprochen wurde.

Nach der Vergrösserung beginnt die markierte Zone wieder, sich im Bild von links nach rechts zu bewegen, bis sie durch "Stop" angehalten wird. Für den Fall, dass die zuletzt erreichte Stelle vergrössert erscheinen soll, wird zusätzlich der Befehl "Zoom" gegeben. Der Vorgang der Vergrösserung und Auswahl einer Stelle durch die wandernde markierte Zone kann mehrmals wiederholt und so ein Punkt ausschliesslich durch Sprachbefehle sehr genau definiert werden.

Die Vorgehensweisen können durch die Befehle "stop", "zurück", "auf", "ab", "links", "rechts", und andere erweitert werden.

In Fig. 6 ist ein weiterer Aspekt der vorliegenden Erfindung gezeigt, bei dem die Selektion und das Codierverfahren ferner zur Mikrofllm-Speicherung verwendet werden können. Eine Auswahl der in Fig. 1 gezeigten Teile der Einrichtung ist erneut in Fig. 6 dargestellt, wobei die Codiervorrichtung und der Speicher 30 in eine Codiervorrichtung 70 und einen Massenspeicher 72 aufgeteilt sind. Als Sicherheitszubehör oder als Alternative zum Quelldokument-Speicher 20 und als redundanter Speicher zum Massenspeicher 72 ist ein Mikrofilmspeicher für die wichtigsten Teile der eingegangenen Dokumente vorgesehen. Die kodierten Signale werden einem Digital-Video-Wandler 74 mit hoher Auflösung zugeführt, der eigentlich eine umgekehrte Videokamera ist und zur Umsetzung von Digitalsignalen in optische Darstellungen mit hoher Auflösung dient, die durch ein herkömmliches optisches System einem Mikrofilm 76 zuführbar sind, der von einer Vorratsspule 78 abgewickelt und einer Spule 80 zugeführt wird, die in bekannter Weise von einem Schrittantrieb 82 angetrieben wird. Obschon ein normaler Spulenfilm dargestellt ist, ist es möglich, Filme jeder Grösse und auch Mikrofiche- oder Mikropunktspeicher zu verwenden.

**Patentansprüche**

1. Verfahren zur Manipulation von in digitaler Form gespeicherten Darstellungen auf einem Bildschirm (26), bei welchem ein Teilbereich des Bildschirms (26) bezeichnet wird und, durch mündliche Eingaben welche in digitale Signale umgewandelt werden, Manipulationen des im bezeichneten Bildschirmbereich Dargestellten ausgelöst werden, wobei die Identifizierung der mündlichen Eingaben durch Vergleiche mit den Einträgen eines Verzeichnisses digital gespeicherter Befehle erfolgt, dadurch gekennzeichnet, dass
   - zur digitalen Speicherung des am Bildschirm (26) Dargestellten ein Speicher in Teilspeicher aufgeteilt wird, die Bildschirmbereichen so zugeteilt werden, dass eine Korrelation zwischen Adressen im Teilspeicher und der Position des entsprechenden Bildschirmbereichs besteht,
   - die Bildschirmbereiche durch sichtbare Teiler gegeneinander abgegrenzt werden, und
   - der Bildschirmbereich jeweils durch mündliche Eingabe einer ihn eindeutig identifizierenden alphanumerischen Sequenz bezeichnet wird.

2. Verfahren nach Anspruch 1, dadurch gekennzeichnet, dass das Befehlsverzeichnis einen Befehl enthält, welcher eine Vergrösserung des bezeichneten Bildschirmbereichs auf Bildschirmgrösse bewirkt.

3. Verfahren nach Anspruch 1 oder 2, dadurch gekennzeichnet, dass das Befehlsverzeichnis einen Befehl enthält, welcher ein Ueberschreiben von Zeichen bewirkt oder einleitet.

4. Verfahren nach einem der Ansprüche 1 bis 3, dadurch gekennzeichnet, dass das Befehlsverzeichnis mindestens einen Befehl enthält, der die Verschiebung eines Cursors von einem Bildschirmbereich in einen anderen Bildschirmbereich bewirkt.

5. Verfahren nach einem der Ansprüche 1 bis 4, dadurch gekennzeichnet, dass das Befehlsverzeichnis einen Befehl zur Einstellung der Lage des gesamten Bildes in horizontaler oder vertikaler Richtung enthält.

6. Verfahren nach einem der Ansprüche 1 bis 5, dadurch gekennzeichnet, dass die Eingabe von Befehlen über eine Tastatur möglich ist.

7. Verfahren nach einem der Ansprüche 1 bis 6, dadurch gekennzeichnet, dass die zu manipulierende Darstellung durch Abtasten und digitale Codierung eines Quelldokuments und eine von der codierten Form ausgehende Darstellung desselben auf dem Bildschirm erzeugt wird.

8. Verfahren nach einem der Ansprüche 1 bis 8, dadurch gekennzeichnet, dass die Darstellung in digitaler Form einem Digital-Video-Wandler zugeführt und das durch denselben erzeugte Bild in verkleinertem Massstab auf Mikrofilm gespeichert wird.

**Claims**

1. Method for the manipulation of displays, stored in a digital form, on a screen (26), in which a partial region of the screen (26) is designated and, by means of verbal inputs, which are converted into digital signals, manipulations of the display in the designated screen region are triggered, the identification of the verbal inputs taking place by comparisons with the entries of a list of digitally stored commands, characterised in that
   - for the purpose of digitally storing the display on the screen (26), a memory is divided up into partial memories which are allotted to screen regions in such a way that there is a correlation between addresses in the partial memory and the position of the corresponding screen region,
   - the screen regions are delimited in respect of each other by visible dividers, and
   - the screen region is designated, in each case, by verbal input of an alphanumeric sequence clearly identifying it.

2. Method according to claim 1, characterised in that the list of commands contains a command which effects an enlargement of the designated screen region to screen size.

3. Method according to claim 1 or 2, characterised in that the list of commands contains a command which effects or initiates an overwrite of characters.

4. Method according to one of the claims 1 to 3, characterised in that the list of commands contains at least one command which effects the displacement of a cursor from one screen region into another screen region.

5. Method according to one of the claims 1 to 4, characterised in that the list of commands contains a command for the adjustment of the position of the whole image in the horizontal or vertical direction.

6. Method according to one of the claims 1 to 5, characterised in that the input of commands is possible by way of a keyboard.

7. Method according to one of the claims 1 to 6, characterised in that there is generated on the screen the display to be manipulated by scanning and digital coding of a source document and a display of the same based on the coded form.

8. Method according to one of the claims 1 to 7, characterised in that the display is supplied in digital form to a digital-video transformer and the image generated by the same is stored on a reduced scale on microfilm.

## Revendications

1. Procédé pour la manipulation de représentations stockées sous une forme numérique sur un écran (26), dans lequel on désigne une zone partielle de l'écran (26) et, par des entrées vocales converties en signaux numériques, on déclenche des manipulation de la représentation sur ladite zone de l'écran, l'identification des entrées vocales étant effectuée par des comparaisons avec les entrées dans un répertoire d'instructions stockées numériquement, caractérisé en ce que
   - pour le stockage numérique de la représentation sur l'écran (26) une mémoire est répartie en mémoires partielles, qui sont attribuées à des zones de l'écran de façon qu'il existe une correlation entre des adresses dans la mémoire partielle et la position de la zone d'écran correspondante,
   - que les zones de l'écran sont délimitées les unes par rapport aux autres par des diviseurs visibles et
   - que la zone de l'écran est toujours désignée par une entrée vocale d'une séquence alphanumérique qui l'identifie sans équivoque.

2. Procédé suivant la revendication 1, caractérisé en ce que le répertoire des instructions contient une instruction qui provoque un agrandissement de la zone d'écran désignée jusqu'à obtenir la dimension de l'écran.

3. Procédé suivant la revendication 1 ou 2, caractérisé en ce que le répertoire des instructions contient une instruction qui provoque ou débute une transcription de signes.

4. Procédé suivant l'une des revendications 1 à 3, caractérisé en ce que le répertoire des instructions contient au moins une instruction qui provoque un déplacement du courseur d'une zone de l'écran dans une autre zone de l'écran.

5. Procédé suivant l'une des revendications 1 à 4, caractérisé en ce que le répertoire des instructions contient au moins une instruction pour le réglage de la position de l'ensemble de la représentation dans le sens horizontal ou vertical.

6. Procédé suivant l'une des revendications 1 à 5, caractérisé en ce que les instructions peuvent être entrées par un clavier.

7. Procédé suivant l'une des revendications 1 à 6, caractérisé en ce que la représentation à manipuler est produite par exploration et codage numérique d'un document de base et qu'une représentation de celui-ci basée sur la forme codée est produite sur l'écran.

8. Procédé suivant l'une des revendications 1 à 7, caractérisé en ce que la représentation sous forme numérique est amenée à un convertisseur numérique vidéo et que l'image produite par celui-ci est stockée, à plus petite échelle, sur microfilm.

FIG. 1

EP 0 150 813 B1

FIG. 2

FIG. 4

FIG. 3

9

FIG. 5

FIG. 6